# EUROPÄISCHE PATENTANMELDUNG

(11) **EP 3 757 413 A1**
(43) Veröffentlichungstag der Anmeldung: **30.12.2020**
(21) Anmeldenummer: 20020292.7
(22) Anmeldetag: 24.06.2020
(51) Int. Cl.: F16D 3/84

(54) **FLANSCHGELENK UND VERFAHREN ZUR HERSTELLUNG EINES FLANSCHGELENKS**

(30) Priorität: 25.06.2019 DE 102019117041
(71) Anmelder: IFA-Technologies GmbH, 39340 Haldensleben (DE)
(72) Erfinder: KIESSLING, Andreas, 39110 Magdeburg (DE); KLEINHAUS, Heike, 39638 Gardelegen OT Solpke (DE); SCHMIDT, Martin, 39340 Haldensleben (DE); SCHMICKER, Dr. David, 39110 Magdeburg (DE); JANKE, Dr. Gerd, 12101 Berlin (DE)
(74) Vertreter: Patentanwälte Schuster, Müller & Partner mbB

(57) **Zusammenfassung**

Die Erfindung geht aus von einem Flanschgelenk, bestehend aus einem Gleichlaufgelenk (1) mit Gelenkaußenring (3), Gelenkinnenring (5), Käfig (9) und Kugeln (8), einem drehfest mit dem Gelenkaußenring (3) des Gleichlaufgelenks verbundenen Flansch (2) und einem zwischen dem Gleichlaufgelenk (1) und dem Flansch (2) angeordneten und drehfest mit dem Gelenkaußenring (3) verbundenen Deckel (10). Zumindest zwischen dem Deckel (10) und dem Gelenkaußenring (3) besteht eine dichte, im gefügten Zustand des Flanschgelenks kraft- und formschlüssige Verbindung. Die drehfeste Verbindung erfolgt mittels konzentrisch, gleichmäßig über den Umfang verteilt angeordneter Spannmittel, die durch in den Gelenkaußenring (3), in den Deckel (10) und in den Flansch (2) eingebrachte Bohrungen (16, 15, 14) hin-durchgeführt sind und die genannten Bauteile gegeneinanderpressen. Ferner sind Mittel zur Verbesserung des Kraft- und Formschlusses an der Stirnfläche zumindest eines der im gefügten Zustand dichtend gegeneinander gepressten Bauteile des Flanschgelenks angeordnet.

Erfindungsgemäß bestehen die Mittel zur Verbesserung des Kraft- und Formschlus-ses aus einer in axialer Richtung aus der Ebene der Stirnfläche des mindestens ei-nen Bauteils heraustretenden ununterbrochenen Dichtkontur (18). Diese Dichtkontur (18) ist als koaxialer, geschlossener und im Bereich der Bohrungen (14, 15, 16) des Flanschgelenks diese umrundender Dichtring ausgebildet und im Bereich des äuße-ren Randes der Stirnfläche mindestens eines der gegeneinander zu verspannenden Bauteile des Flanschgelenks angeordnet.

## Beschreibung

### Stand der Technik

Die Erfindung geht aus von einem Flanschgelenk, nach dem Oberbegriff des Anspruchs 1 und einem Verfahren zur Herstellung eines Flanschgelenks nach dem Oberbegriff des Anspruchs 9.

Flanschgelenke bestehen aus einem Wellenflansch und einem Gleichlaufgelenk. Sie werden vorwiegend im Antriebsstrang von Fahrzeugen eingesetzt. Der Innenraum des Gleichlaufgelenks ist mit einem Schmiermittel gefüllt, dessen Austritt durch eine zuverlässige Dichtung, in der Regel eine Dichtkappe oder ein Deckel, verhindert werden muss. Gleichzeitig verhindert diese Dichtung auch den Eintritt von Schmutz und Feuchtigkeit in den Gelenkinnenraum. Flanschgelenkabdichtungen sind in den unterschiedlichsten Ausführungen seit langem bekannt. Sie gewährleisten die Dichtheit im Bereich der Schnittstelle zwischen dem Gleichlaufgelenk und dem Wellenflansch. Diese Schnittstelle stellt einen kritischen Bereich der drehfesten Verbindung von dem Wellenflansch mit dem Außenring des Gleichlaufgelenks dar. Von dieser Verbindung werden hohe, häufig in ihrer Richtung wechselnde Drehmomente übertragen. Die drehfeste Verbindung zwischen dem Wellenflansch und dem Gleichlaufgelenk wird von Schrauben übernommen, die konzentrisch zur Drehachse des Gleichlaufgelenks in einem gleichmäßigen Winkelabstand über den Außenring des Gleichlaufgelenks verteilt angeordnet sind und den Wellenflansch mit dem Außenring verschrauben. Im Idealfall gewährleistet diese Verschraubung eine rein kraftschlüssige Verbindung zwischen dem Außenring des Gelenks und dem Wellenflansch, d. h. dass die Schrauben nicht auf Scherung belastet werden. Aufgrund der hohen und ständig wechselnden Belastung kommt es in der Praxis jedoch häufig zu einer Lockerung der Schraubverbindung, wodurch die kraftschlüssige Verbindung nachlässt, in der Folge der Außenring und der Wellenflansch sich gegenseitig geringfügig verdrehen und die Schrauben dadurch dann doch auf Scherung beansprucht werden. Dieses Verdrehen führt dann in der Regel auch zu einer Undichtigkeit der Verbindung, unabhängig davon, ob zusätzlich zu der Dichtkappe eine Dichtung verwendet wurde oder ob die Dichtkappe allein aufgrund der Anpresskräfte der Schrauben die Abdichtung gewährleisten sollte. Zur Verhinderung der unerwünschten radialen Verschiebung zwischen den Komponenten der Verbindung, wurde eine Kupplung zum verdrehsicheren Kuppeln eines Wellenflansches mit dem Außenring eines Gleichlaufgelenks entwickelt, bei der beiderseits der Bohrungen für die Befestigungsschrauben im Außenring des Gleichlaufgelenks sich radial erstreckende Erhöhungen und Vertiefungen angeordnet sind, von denen zumindest diejenigen des Gelenkaußenrings durch meißelschlagförmige Einprägungen gebildet sind. Die Erhöhungen und Vertiefungen erstrecken sich in Richtung Innen- oder Außenumfang des Gelenkaußenrings oder des Wellenflansches. Beim Zusammenschrauben graben sich die Oberflächenaufwerfungen der Stirnfläche des Gelenkaußenringes in die Stirnfläche der Abdichtkappe ein, wobei ein ungehindertes örtliches Fließen des Materials der Abdichtkappe in die Einprägungen hinein erfolgt, die dadurch vollständig vom Material der Abdichtkappe ausgefüllt werden, wodurch sich eine formschlüssige Verbindung zwischen dem Wellenflansch und dem Rand der Abdichtkappe ausbildet (DE 32 10 389 C2).

Bekannt ist ferner eine Anordnung, bestehend aus einem Gleichlaufgelenk, einer Schmierfettkappe und einem Gelenkflansch, bei der die formschlüssige Verbindung zwischen dem Außenring des Gleichlaufgelenks und dem Gelenkflansch durch an beiden Kontaktflächen der Schmierfettkappe angeordnete Vorsprünge, die in im montierten Zustand in die jeweils gegenüberliegende Kontaktfläche von Außenring und Gelenkflansch eingebrachte Ausnehmungen formschlüssig eingreifen, erzielt wird. Die Vorsprünge können aus dem gleichen Material wie die Schmierfettkappe oder auch aus einem elastischeren Material, beispielsweise Gummi oder Kunststoff, bestehen (DE 103 25 411 A1).

Der Nachteil dieser beiden technischen Lösungen besteht darin, dass die Mittel zur Erzielung des jeweiligen Formschlusses durch zusätzliche Bearbeitungsschritte erzeugt werden müssen, was mit einem bestimmten fertigungstechnischen Aufwand verbunden ist.

Somit besteht die Aufgabe der vorliegenden Erfindung in der Entwicklung eines Flanschgelenkes, das bei Gewährleistung einer zuverlässigen Dichtheit auf einfachere Weise herstellbar ist.

### Die Erfindung und ihre Vorteile

Das erfindungsgemäße Flanschgelenk mit dem kennzeichnenden Merkmal des Anspruchs 1 hat demgegenüber den Vorteil, dass es, ebenso wie der o. g. Stand der Technik, ohne eine separate Dichtung auskommt. Die Dichtfunktion wird allein von den die Dichtpartner darstellenden Bauteilen und/oder Baugruppen des Flanschgelenks, nämlich durch dessen kraft- und formschlüssige Verbindung, gewährleistet, wobei die Übertragung des Drehmomentes allein durch die kraftschlüssige Verbindung bewirkt wird. Die erfindungsgemäße, in ihrer Fläche reduzierte Dichtkontur bewirkt eine Homogenisierung der Flächenpressung und damit eine optimale Pressungsverteilung über die gesamte Dichtfläche und eine Optimierung des Kraftflusses in der Schraubverbindung. Insbesondere erhält die Schraubverbindung durch die die Bohrungen umlaufende Dichtkontur eine Stützwirkung, so dass durch die Schraubennormalkraft verursachte Versatzmomente eliminiert werden. Der von der Dichtkontur bewirkte Formschluss verringert zudem die radiale Relativbewegung innerhalb der Schraubverbindung, wodurch sich deren Sicherheit erhöht. Aufgrund dessen, dass die Dichtkontur eine sehr gute Werkstoffausnutzung ermöglicht, kann dieses Dichtprinzip auch bei räumlich sehr begrenzten Verhältnissen angewendet werden.

Die Dichtkontur bewirkt ferner, dass sich der zwischen dem Gleichlaufgelenk und dem Flansch angeordnete Deckel bei der Montage des Flanschgelenks nicht verwölbt. Ein Lebensdauertest hat ergeben, dass der Deckel auch nach Lösen der Schraubverbindung seine radiale Spannkraft nicht verloren hat.

Ein weiterer Vorteil der Erfindung besteht in der Fertigung des die Dichtkontur aufweisenden Bauteils. Dadurch, dass die Dichtkontur vollständig um die Bohrungen herumgeführt ist, befindet sich im Bereich der Bohrung eine ebene Fläche, so dass das Anpilotieren der Bohrer entfallen kann. Zudem wirkt sich das positiv auf die Standzeit der Bohrer aus.

Diese Vorteile werden dadurch erreicht, dass die Mittel zur Verbesserung des Kraft- und Formschlusses zwischen den mediendicht miteinander zu verbindenden Bauteilen des Flanschgelenks aus einer im Bereich des äußeren Randes der Stirnfläche mindestens eines dieser Bauteile angeordneten ununterbrochenen Dichtkontur bestehen. Die Dichtkontur ist als ein koaxialer, geschlossener Dichtring ausgebildet. Die Bohrungen des Flanschgelenks werden von dieser Dichtkontur vollständig umrundet, d. h. auch in ihrem radial nach innen gerichteten Umfangsbereich verläuft die den Kraft- und Formschluss bewirkende Dichtkontur, wobei diese, sich im Bereich der Bohrungen befindliche Dichtkontur ebenfalls in die Ebene des Dichtringes integriert ist.

Nachfolgend wird die Wirkungsweise der erfindungsgemäßen Dichtkontur beschrieben: Bei der Montage werden das Gleichlaufgelenk, der Deckel und der Flansch mittels Schrauben so stark miteinander verschraubt, dass es im Bereich der Dichtkontur zu einem Materialfließvorgang kommt. Das wird in der Regel das dünnwandigste Bauteil, also den Deckel betreffen. Dabei fließt das Material um die Dichtkontur herum oder in diese hinein, wodurch es sowohl in radialer als auch tangentialer Richtung zu einem Formschluss zwischen dem Deckel und dem Gelenkaußenring kommt, der in der Art einer berührenden Labyrinth-Dichtung die mediendichte Verbindung zwischen diesen beiden Teilen bewirkt. Um den Fließvorgang zu erleichtern, kann der Deckel aus einem weicheren Material als die mit ihm verschraubten Bauteile des Flanschgelenks bestehen oder seine Oberfläche mit einem weicheren Material passiviert, beispielsweise verzinkt sein.

Wie bei der Beschreibung des dieser Erfindung zugrundeliegenden Standes der Technik bereits erläutert, waren die allein durch das Verschrauben der Bauteile erzielbaren Anpresskräfte zur Gewährleistung der kraftschlüssigen Verbindung nicht ausreichend, um die von dem Flanschgelenk zu übertragenden wechselnden hohen Drehmomente ohne eine Radialverschiebung zwischen dem Gleichlaufgelenk und dem Deckel zu übertragen. Die Folgen waren eine Scherbelastung der Schrauben und in der Folge auch eine Undichtheit zwischen dem Deckel und dem Gleichlaufgelenk. Um dies zu verhindern, wurden zusätzlich noch solche Mittel in diese Verbindung integriert, die die kraftschlüssige Verbindung durch einen Formschluss unterstützen. Dies ist bei der vorliegenden Erfindung nicht erforderlich. Die Verbesserung des Kraftschlusses wird allein durch die Gestaltung der am Außenumfang des Gelenkaußenrings angeordneten ringförmigen ununterbrochene Dichtkontur erreicht. Der oben beschriebene Formschluss zwischen dem Deckel und dem Gelenkaußenring trägt in der vorliegenden Erfindung überwiegend zur Verbesserung der Dichtheit des Flanschgelenks bei.

Nach einer vorteilhaften Ausgestaltung der Erfindung hebt sich die Dichtkontur aus der Ebene der Stirnfläche des den einen Dichtpartner darstellenden Bauteils des Flanschgelenks als eine orthogonal-planare Dichtfläche heraus. Dadurch wird sich beim Zusammenpressen der Bauteile die Dichtkontur in ein weicheres Material des anderen Dichtpartners eindrücken und so eine formschlüssige Verbindung gewährleisten. Andererseits ist es auch möglich, die Dichtkontur als ringförmige Nut auszubilden, die beim Zusammenpressen der Bauteile das weichere Material des anderen Dichtpartners aufnimmt.

Nach einer anderweitigen vorteilhaften Ausgestaltung der Erfindung ist die Dichtkontur an der dem Flansch zugewandten Stirnseite des Gelenkaußenrings des Gleichlaufgelenks angeordnet. Es ist aber auch möglich, dass sich die Dichtkontur an der dem Gleichlaufgelenk zugewandten Stirnseite des Flansches befindet. In dem Fall drückt sich die Dichtkontur des Flansches beim Zusammenpressen der Bauteile durch den Deckel hindurch gegen die Stirnseite des Gelenkaußenrings und gewährleistet hier eine mediendichte Verbindung, d. h. sie verhindert das Austreten von Öl oder Schmierfett und den Eintritt von Feuchtigkeit und Schmutz. Eine dritte Variante besteht darin, die Dichtkontur in den Deckel einzubringen. Ist auch eine Abdichtung des Flansches erforderlich, so kann zusätzlich zum Gelenkaußenring und/oder dem Deckel auch der Flansch mit der Dichtkontur versehen sein. Dabei versteht es sich von selbst, dass in dem Fall die Dichtkonturen deckungsgleich sein müssen.

Nach einer ebenfalls vorteilhaften Ausgestaltung der Erfindung ist die um die Bohrungen herum verlaufende kreisförmige Dichtkontur etwa rechtwinklig mit einem Radius in die tangentiale Dichtkontur geführt. Dadurch entstehen zwischen den Bohrungen taschenartige Ausnehmungen, in denen sich Feststoffe und Schmierstoff ablagern können.

Nach einer zusätzlichen vorteilhaften Ausgestaltung der Erfindung weist die Kante der Dichtkontur an ihrem Außendurchmesser und/oder im Bereich der Bohrungen die zum Gelenkinnenring weisende Dichtkontur eine Fase auf. Dadurch wird eine Verminderung der Kerbbeanspruchung des Deckels an seiner Innenkante erreicht. Außerdem dient die Fase als Freistich für den Deckelradius an seiner Außenkante.

Nach einer anderweitigen vorteilhaften Ausgestaltung der Erfindung ist die Stirnfläche der Dichtkontur und/oder die mit der Dichtkontur im montierten Zustand im Kontakt befindliche Stirnfläche mit einer Rauigkeit versehen. Dadurch wird sowohl die kraft- als auch die formschlüssige Komponente der Verbindung der Dichtpartner verstärkt. Drehriefen können diesen Aspekt unterstützen.

Das Verfahren zur Herstellung des in Anspruch 1 beschriebenen Flanschgelenks sieht vor, dass als Mittel zur Verbesserung des Kraft- und Formschlusses im Bereich des äußeren Randes der Stirnfläche des mindestens einen der gegeneinander zu verspannenden Bauteile des Flanschgelenks eine ununterbrochene Dichtkontur eingebracht wird. Diese Dichtkontur ist als koaxialer, geschlossener Dichtring ausgebildet. Im Bereich der Bohrungen des mindestens einen Bauteils des Flanschgelenks sind diese von der Dichtkontur in der gleichen Ebene wie die am Außenumfang umlaufende Dichtkontur umrundet, d. h. auch in ihrem radial nach innen gerichteten Umfangsbereich verläuft die den Kraft- und Formschluss verbessernde Dichtkontur. Die Dichtkontur kann in jedes als Dichtpartner fungierendes Bauteil eingebracht werden, also in die jeweils im montierten Zustand einander zugewandten Stirnflächen des Gelenkaußenrings des Gleichlaufgelenks, des Deckels und/oder des Flansches.

Ein besonderer Vorteil der Erfindung besteht darin, dass die Dichtkontur bereits in einem sehr frühen Stadium der Fertigung des Gelenkaußenrings, des Flansches oder des Deckels eingebracht werden kann, nämlich, je nach Herstellungsart beim Gießen oder Umformen oder bei beiden Prozessen. In einer nachfolgenden stirnflächigen Planbearbeitung kann sie ihre spezifische Oberflächenstruktur erhalten. Grundsätzlich kann sie aber auch erst bei der spanenden Bearbeitung hergestellt und mit ihrer spezifischen Oberflächenstruktur versehen werden.

Weitere Vorteile und vorteilhafte Ausgestaltungen der Erfindung sind der nachfolgenden Beschreibung, der Zeichnung und den Ansprüchen entnehmbar.

### Zeichnung

Der Gegenstand der Erfindung ist in den Zeichnungen dargestellt und wird im Folgenden näher erläutert. Es zeigen:
- Fig. 1: ein Flanschgelenk in einer Explosionsdarstellung,
- Fig. 2: eine Schnittdarstellung des Flanschgelenks,
- Fig. 3: ein erstes Detail aus der Schnittdarstellung aus Fig. 2,
- Fig. 4: ein zweites Detail aus der Schnittdarstellung aus Fig. 2 und
- Fig. 5: eine Draufsicht auf den Gelenkaußenring des Gleichlaufgelenks.

### Beschreibung des Ausführungsbeispiels

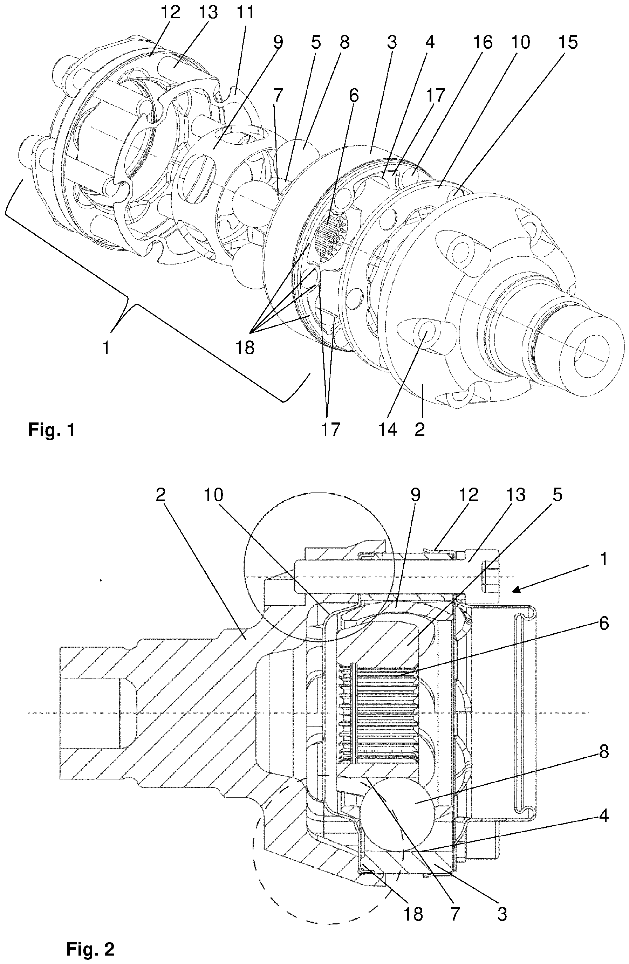

Fig. 1 zeigt ein Flanschgelenk in einer Explosionsdarstellung. Es besteht aus einem Gleichlaufgelenk 1 und einem in axialer Verlängerung zu diesem angeordneten Flansch 2. Das Gleichlaufgelenk 1 weist einen Gelenkaußenring 3 mit äußeren Kugellaufbahnen 4 und einen in diesem koaxial angeordneten Gelenkinnenring 5 mit einer inneren Passverzahnung 6 sowie an seinem Außenumfang eingebrachte innere Kugellaufbahnen 7 auf. Im gefügten Zustand (Fig. 2) sind der Gelenkaußenring 3 und der Gelenkinnenring 5 formschlüssig mit ein Drehmoment übertragenden Kugeln 8, die sich in den paarweise gegenüberliegenden Kugellaufbahnen 4 und 7 von Gelenkaußen- und -innenring 3, 5 befinden und in einem Käfig 9 gehalten werden, verbunden. Flanschseitig ist das Gleichlaufgelenk 1 mittels eines zwischen diesem und dem Flansch 2 angeordneten Deckels 10 und wellenseitig mittels einer Dichtung 11 und einer Dichtkappe 12 mit Balg mediendicht abgedichtet.

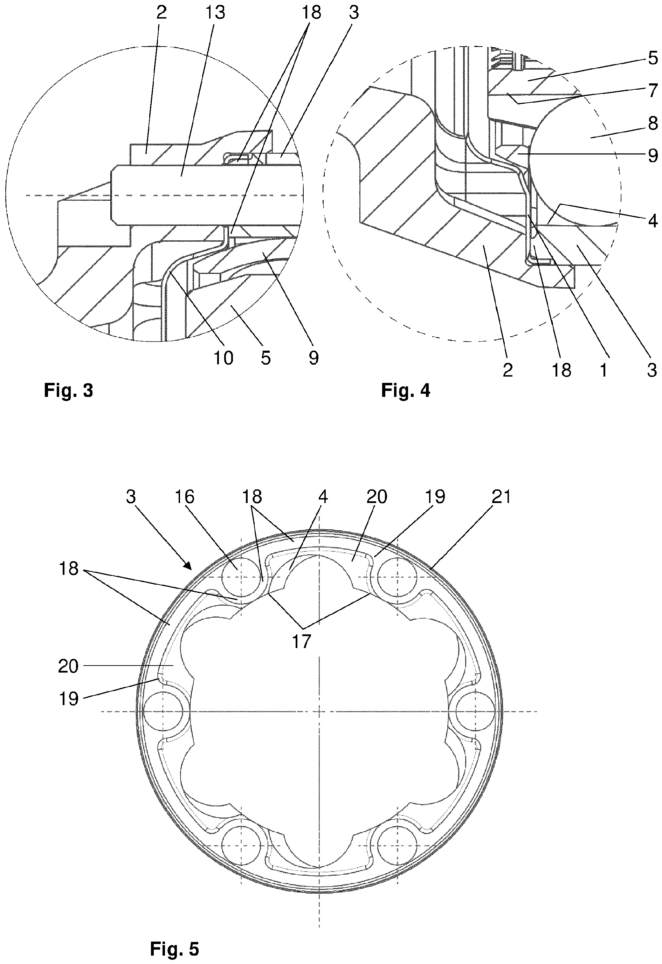

Der zwischen dem Flansch 2 und dem Gelenkaußenring 3 des Gleichlaufgelenks 1 angeordnete Deckel 10 gewährleistet, ohne eine zusätzliche Dichtung unter der Presskraft von in den Fig. 2 und 3 dargestellten Schrauben 13 die mediendichte Abdeckung der dem Flansch 2 zugewandten Stirnseite des Gleichlaufgelenks 1. Zur Durchführung der Schrauben 13 weisen der Gelenkaußenring 3, der Flansch 2 und der Deckel 10 nahe dem Außenumfang dieser Bauteile konzentrisch um die Drehachse des Flanschgelenks angeordnete, in axialer Richtung fluchtende Bohrungen auf, wobei die Bohrungen des Flansches 2 als Gewindebohrung 14, die des Deckels 10 und des Gelenkaußenrings 3 als Durchgangsbohrungen 15, 16 ausgeführt sind. Die Durchgangsbohrungen 16 sind in dem Bereich der zwischen den äußeren Kugellaufbahnen 4 des Gelenkaußenringes 3 verbliebenen Stege 17 eingebracht.

Fig. 2 zeigt einen Axialschnitt durch das Flanschgelenk im montierten Zustand, bei dem das Gleichlaufgelenk 1, der Flansch 2 und der Deckel 10 mittels der Schrauben 13 mit einer Anpresskraft definierter Größe zusammengepresst sind. Dabei bewirkt die Gestaltung der am Außenumfang des Gelenkaußenrings 3 angeordneten ringförmigen ununterbrochenen Dichtkontur 18 sowohl eine Verbesserung des Kraftschlusses als auch der Dichtheit des Flanschgelenks. Wie aus den diesen Bereich vergrößert darstellenden Detailzeichnungen der Fig. 3 und 4 erkennbar ist, tritt die Dichtkontur 18 im vorliegenden Beispiel aus der Ebene der Stirnfläche des Gelenkaußenrings 3 in axialer Richtung zum Deckel 10 hervor. Die in Fig. 5 gezeigte Draufsicht auf die dem Flansch 2 zugewandte Stirnfläche des Gelenkaußenringes 3 lässt erkennen, dass die Dichtkontur 18 im vorliegenden Beispiel als eine geschlossene ringförmige Dichtfläche ausgebildet und im Bereich der Durchgangsbohrungen 16 ununterbrochen um diese herumgeführt ist. Sie umgibt die Durchgangsbohrungen 16 also auch in dem schmalen, radial nach innen gerichteten Bereich der Stege 17 und ist daher auch in diesem, für die Dichtheit des Flanschgelenks besonders kritischen Bereich wirksam. Die Breite der Dichtkontur 18 ist aus Platzgründen im Bereich der Durchgangsbohrungen 16 etwas schmaler als im Bereich zwischen diesen. Im vorliegenden Beispiel stößt der Bereich der um die Durchgangsbohrungen 16 herum geführten Dichtkontur 18 nahezu rechtwinklig auf den etwas breiteren tangentialen Bogen der zwischen Durchgangsbohrungen 16 befindlichen Dichtkontur 18 und geht über einen Radius 19 in diesen, etwas breiteren tangentialen Bogen über. Dadurch bilden sich beiderseits der äußeren Kugellaufbahnen 4 des Gelenkaußenringes 3 taschenartige Ausnehmungen 20, die keine Dichtfläche bilden und in denen sich Schmierstoff und/oder Feststoffpartikel ansammeln können.

Im vorliegenden Beispiel befindet sich die Dichtkontur 18 in der Stirnfläche des Gelenkaußenrings 3 des Gleichlaufgelenks 1 und ist mit einer Fase 21 versehen. Die Dichtkontur 18 kann aber auch in dem axial gegenüberliegenden Bereich der Stirnfläche des Flansches 2 oder des Deckels 10 vorgesehen sein. In allen drei Varianten läuft der im Wesen der Erfindung beschriebene Vorgang des plastischen Fließens des Deckels in diesem Bereich infolge der Anpresskräfte ab.

Alle hier dargestellten Merkmale können sowohl einzeln als auch in beliebiger Kombination miteinander erfindungswesentlich sein.

### Bezugszahlenliste

- 1: Gleichlaufgelenk
- 2: Flansch
- 3: Gelenkaußenring
- 4: Äußere Kugellaufbahnen
- 5: Gelenkinnenring
- 6: Innere Passverzahnung
- 7: Innere Kugellaufbahnen
- 8: Kugeln
- 9: Käfig
- 10: Deckel
- 11: Dichtung
- 12: Dichtkappe
- 13: Schrauben
- 14: Gewindebohrung
- 15: Durchgangsbohrung Deckel
- 16: Durchgangsbohrung Gelenkaußenring
- 17: Stege
- 18: Dichtkontur
- 19: Radius
- 20: Ausnehmung
- 21: Fase

## Patentansprüche

1. Flanschgelenk, bestehend aus einem Gleichlaufgelenk (1) mit Gelenkaußenring (3), Gelenkinnenring (5), Käfig (9) und Kugeln (8), einem drehfest mit dem Gelenkaußenring (3) des Gleichlaufgelenks verbundenen Flansch (2) und einem zwischen dem Gleichlaufgelenk (1) und dem Flansch (2) angeordneten und drehfest mit dem Gelenkaußenring (3) verbundenen Deckel (10), wobei zumindest zwischen dem Deckel (10) und dem Gelenkaußenring (3) eine dichte, im gefügten Zustand des Flanschgelenks kraft- und formschlüssige Verbindung besteht und die drehfeste Verbindung mittels konzentrisch, gleichmäßig über den Umfang verteilt angeordneter Spannmittel erfolgt, die durch in den Gelenkaußenring (3), in den Deckel (10) und in den Flansch (2) eingebrachte Bohrungen (16, 15, 14) hindurchgeführt sind und die genannten Bauteile gegeneinanderpressen, und Mittel zur Verbesserung des Kraft- und Formschlusses an der Stirnfläche zumindest eines der im gefügten Zustand dichtend gegeneinander gepressten Bauteile des Flanschgelenks angeordnet sind,
**dadurch gekennzeichnet,**
**dass** die Mittel zur Verbesserung des Kraft- und Formschlusses aus einer in axialer Richtung aus der Ebene der Stirnfläche des mindestens einen Bauteils heraustretenden ununterbrochenen Dichtkontur (18) bestehen, diese Dichtkontur (18) als koaxialer, geschlossener und im Bereich der Bohrungen (14, 15, 16) des Flanschgelenks diese umrundender Dichtring ausgebildet ist, und dass diese Dichtkontur (18) im Bereich des äußeren Randes der Stirnfläche mindestens eines der gegeneinander zu verspannenden Bauteile des Flanschgelenks angeordnet ist.

2. Flanschgelenk nach Anspruch 1,
**dadurch gekennzeichnet,**
**dass** die Dichtkontur (18) aus einer orthogonal-planar aus der Ebene der Stirnfläche des mindestens einen Bauteils hervortretenden Dichtfläche besteht.

3. Flanschgelenk nach Anspruch 1 oder 2,
**dadurch gekennzeichnet,**
**dass** die Dichtkontur (18) an der dem Flansch (2) zugewandten Stirnseite des Gelenkaußenrings (3) des Gleichlaufgelenks (1) angeordnet ist.

4. Flanschgelenk nach Anspruch 1 oder 2,
**dadurch gekennzeichnet,**
**dass** die Dichtkontur (18) in dem Deckel (10) des Flanschgelenks angeordnet ist.

5. Flanschgelenk nach Anspruch 1 oder 2,
**dadurch gekennzeichnet,**
**dass** die Dichtkontur (18) an der dem Gleichlaufgelenk (1) zugewandten Stirnseite des Flansches (2) des Flanschgelenks angeordnet ist.

6. Flanschgelenk nach einem der Ansprüche 1 bis 5,
**dadurch gekennzeichnet,**
**dass** die um die Bohrungen (14, 15, 16) herum verlaufende kreisförmige Dichtkontur (18) etwa rechtwinklig mit einem Radius (19) in die tangentiale Dichtkontur (18) geführt ist.

7. Flanschgelenk nach einem der Ansprüche 1 bis 6,
**dadurch gekennzeichnet,**
**dass** die Kante der Dichtkontur (18) an ihrem Außendurchmesser und/oder im Bereich der Bohrungen (14, 15, 16) die zum Gelenkinnenring (5) hin weisende Kante der Dichtkontur (18) eine Fase (21) oder einen Radius aufweist.

8. Flanschgelenk nach einem der Ansprüche 1 bis 7,
**dadurch gekennzeichnet,**
**dass** die Stirnfläche der Dichtkontur (18) und/oder die mit der Dichtkontur (18) im montierten Zustand im Kontakt befindliche Stirnfläche mit einer Rauigkeit versehen ist.

9. Verfahren zur Herstellung eines Flanschgelenks, bestehend aus einem Gleichlaufgelenk (1) mit Gelenkaußenring (3), Gelenkinnenring (5), Käfig (9) und Kugeln (8), einem drehfest mit dem Gelenkaußenring (3) des Gleichlaufgelenks verbundenen Flansch (2) und einem zwischen dem Gleichlaufgelenk (1) und dem Flansch (2) angeordneten und drehfest mit dem Gelenkaußenring (3) verbundenen Deckel (10), wobei zumindest zwischen dem Deckel (10) und dem Gelenkaußenring (3) eine dichte kraft- und formschlüssige Verbindung durch ein Festziehen konzentrisch, gleichmäßig über den Umfang verteilt angeordneter Spannmittel hergestellt wird, die durch in den Gelenkaußenring (3), in den Deckel (10) und in den Flansch (2) eingebrachte Bohrungen (16, 15, 14) hindurchgeführt werden und die genannten Bauteile gegeneinanderpressen, und die Mittel zur Verbesserung des Kraft- und Formschlusses zumindest an einer Stirnfläche der im gefügten Zustand dichtend gegeneinander gepressten Bauteile des Flanschgelenks angebracht werden,
**dadurch gekennzeichnet,**
**dass** als Mittel zur Verbesserung des Kraft- und Formschlusses in mindestens eines der gegeneinander zu verspannenden Bauteile des Flanschgelenks im Bereich des äußeren Randes der Stirnfläche des mindestens einen Bauteils eine ununterbrochene Dichtkontur (18) eingebracht wird, die als koaxialer, geschlossener und im Bereich der Bohrungen (14, 15, 16) des Flanschgelenks diese umrundender Dichtring ausgebildet ist.

10. Verfahren nach Anspruch 9,
**dadurch gekennzeichnet,**
**dass** die Dichtkontur (18) bei dem ur- und/oder umformenden Herstellungsverfahren des Rohteils des jeweiligen Bauteils eingebracht wird.
